# EUROPEAN PATENT SPECIFICATION

(11) **EP 1 941 246 B1**
(45) Date of publication and mention of the grant of the patent: **17.09.2014**
(21) Application number: 06829920.5
(22) Date of filing: 24.10.2006
(51) Int. Cl.: G01F 3/10, G01F 15/14, G01F 15/18, G05D 7/06, F16K 11/078, F16N 25/04, F16N 27/00, F16N 27/02, F16N 29/02, F16N 29/04

(54) **APPARATUS FOR DETERMINING AND CONTROLLING FLOW RATE**
VORRICHTUNG ZUR BESTIMMUNG UND STEUERUNG EINES VOLUMENSTROMS
APPAREIL DE DETERMINATION ET DE REGULATION DE DEBIT

(30) Priority: 26.10.2005 DE 102005051307
(43) Date of publication of application: 09.07.2008
(73) Proprietor: AS-Antriebstechnik und Service GmbH, 48734 Reken (DE)
(72) Inventor: KASPARI, Gerd, 48734 Reken (DE)
(74) Representative: Fleuchaus, Michael A.
(86) International application number: PCT/EP2006/067706
(87) International publication number: WO 2007/048784

(56) References cited:
- EP-A- 0 498 242
- EP-A1- 0 386 326
- EP-A1- 0 928 883
- DE-A1- 3 918 925
- GB-A- 621 142
- US-A1- 5 197 568

## Description

The present invention relates to an apparatus for determining a flow rate, in particular for an oil supply system of a drive means and its use for drive systems.

Apparatus for determining a flow rate are known in the prior art.

EP 0 386 326 is directed to a flow control system for lubrication devices that have modules with different functions and can be combined in any desired combination to form a structural unit. A bypass is disclosed for bypassing a filter.

DE 39 18 925 discloses an apparatus for allocating lubricant dynamic flow measurement device having a hand throttle element which is a dynamic flow rate measurement device having a display device showing the movement of a sensor element.

US 5 197 568 relates to a series of distribution and measuring components for a lubricating oil system for machinery including several bearings. It also pertains to a method of manufacturing the principal components of the series. The series is particularly intended for the construction of the distribution and measuring section of the lubricating oil system of oil-lubricated bearing in a paper machine.

EP 0 498 242 describes a system for distributing lubricant to several users via a plurality of modular flowmeters.

GB 621 142 is directed to an invention that relates to valves for controlling the flow of fluids through-conduits between zero flow and a maximum flow, with effective graduation of the flow between the limits.

For example, flow-though measuring devices are known, by which the flow rate of a fluid is determined by means of a floating element rotatable about its longitudinal axis and its position in a tube, though which fluid flows. This method has the drawback, among others, that the measurement accuracy of the method is limited and large inaccuracies occur, especially for small flow volumes. This means, among other things, that a number of different measuring devices must be used for different flow rate ranges and that large deviations of a measurement result must be tolerated for small throughput amounts.

Furthermore, the described devices have the problem, that maximal and minimal values must be preset for monitoring the flow to guarantee the operational safety of the aggregates being supplied. For example, in the use of oil supply systems, the functionality of the components being supplied should be maintained. However, due to the sometimes large fluctuation ranges of the measuring devices in the prior art, additional safety measures must be taken, because either the selected limit values are too high, which means that the oil volume to be supplied is correspondingly high, or additional measures need be taken to ensure supply. On the whole, the control and regulation possibilities of the systems suffer under the described conditions, so that one object of the present invention is to mitigate the known problems of the prior art.

A further object of the present invention is to provide an apparatus for determining a flow rate, which allows the adaptation of the apparatus for different flow ranges with little modifications and improves at the same time the long-term reliability of such apparatus. Furthermore, the service effort should be reduced and possible modifications of the configuration of the apparatus should be possible during operation.

The object is achieved by the apparatus according to the present invention for determining the flow rate according to claim 1. Preferred embodiments are the subject matter of the dependent claims.

The apparatus for determining the flow rate according to the present invention comprises at least one flow passage for a fluid, an adjustable measuring device and at least one throttle. According to the invention, the throttle is arranged to be movable about at least one pivot axis and engages with a predetermined flow edge section in at least one region of at least one flow passage of the apparatus. The throttle comprises at least one variable flow edge region on its circumference, for determining the free flow cross section.

The term engage is understood here in that the throttle is arranged in the flow passage, such that it variably configures the flow cross section in cooperation with a portion of the flow passage. The range of variability lies, according to the invention, between a completely open flow cross section and a completely closed flow cross section, where clearly every type of intermediate position can be set. The present invention also encompasses predetermined positions being preferably set, where a combination of the two operational modes is also encompassed in the present invention.

According to the present invention, the flow passage is understood as a spatially determined region, within which a fluid is preferably located or flows.

An adjustable measuring device is understood according to the present invention as a device by which a flow rate, i.e. a fluid amount per unit time can be determined. Preferably, such a measuring device comprises two or more rotary members, which are arranged within the fluid flow passage, such that the rotary members seal off the passage in at least some sections and a volume flow takes place substantially only when the rotary members rotate about their pivot axes.

Such measuring methods are also partially known in the prior art. For example, a predetermined volume flow through the measuring device can be achieved by,rotation of two oval wheels, which have a predetermined position with respect to one another. By rotating the oval wheels, a volume along the path is determined. Furthermore, the volume per revolution of the rotary members can be determined by the selection of the wheels, in particular their size, form and relative position to one another, so that a larger measurement range can be covered through a suitable selection of the rotary members.

The present invention also encompasses variability of the measurement range through simple selection or a simple exchange of the rotary member within the measuring device, so that different measurement ranges are available without changing the housing geometry.

For example, measurement ranges can be covered in the region between 0.001 l/min to 100 l/min, where the rotary members for example each have a range of values between 0.01 l/min to 0.1 l/min, 0.10 l/min to 4.0 l/min, 0.3 l/min to 8.0 l/min and 1.0 l/min to 10 l/min. Evidently, further value ranges are possible, which are also encompassed in the present invention.

According to a further particularly preferred embodiment, the rotation of the rotary members is detected by at least one sensor, where this can occur for example by means of an induction field or a coil or can also be achieved optically. Such detection means are known in the prior art, so that a further explanation is not given.

According to a preferred embodiment, the apparatus for determining a flow rate comprises at least one bypass, which comprises a bypass actuating member in at least one portion of its flow passage. The bypass actuating member can for example be a control piston, which is activated manually or electrically. According to its function, the bypass actuating member is received in a bypass of the apparatus, where the bypass itself according to a further embodiment connects the inlet portion of the measurement apparatus and its outlet portion. The measuring device can for example be completely or partially removed from the flow passage of the fluid.

According to the present invention, a fluid is preferably understood as a liquid, which for example is a true liquid, a suspension, dispersion or emulsion. Preferably, such liquids can be organic or aqueous. According to a particularly preferred embodiment, oils are understood as a liquid, for example natural or synthetic oils, which preferably have a predetermined viscosity or a predetermined viscosity range. It will be understood that combinations of these liquids represent corresponding fluids. Apart from oils, food products can be dosed, for example, a liquid chocolate.

The throttle or its control edge have a predetermined inclination with respect to the flow passage. The inclination or slope between the flow passage and the throttle lies for example between 0° and 180°, preferably between 25° and 155°, particularly preferred between 45° and 125° and is preferably substantially 90°. The inclination is defined substantially by the control edge of the throttle with respect to the main flow axis of the following flow passage.

The rotatable throttle according to the present invention has a substantially rotationally symmetric basic form in axial direction. If one forms a so-called roll-out projection of the circumference of this basic body, a functional curve results for at least one control edge region, which is determined depending upon at least one variable. The present invention includes that this functional dependency comprises for example a linear, quadratic, logarithmic, polynomial or another functional relationship, which preferably is represented as a continuous function. According to a further particularly preferred embodiment, the function can also be continuous only in sections, so that step functions or discontinuous regions and also a combination thereof are included in the present invention.

According to a preferred embodiment of the throttle, a predetermined free flow cross section is formed with the control edge region and the flow passage, which is variable at one side by overlapping a control edge region with the opening of the flow passage. According to a further embodiment, the invention incorporates the provision of the variation of the flow cross section also on two sides, by means of an opening in the mantle region. In this example, a slot comprises for example two parallel control edges, which can be positioned before, after or to overlap the cross section. Apart from such a parallel arrangement of the control edges in the throttle region, the invention also includes the control edges to be configured independently of one another and not being arranged parallel to one another.

Independent of the use of one or more control edges of the throttle for determining the free flow cross section, certain positions on the circumference of the throttle can also determine the flow cross section, which cannot be directly described by the functional curve of a rolled-out circumferential surface.

The invention also includes the at least one control edge not being linear, but having a predetermined curve, where the control edge or edges are determined by a plurality of openings, in particular bores, which are arranged in a predetermined manner in the periphery of the throttle. The invention also includes the arrangement of two opposing control edges, which for example extend parallel or extend from a common intersection point at least partially about the circumference of the throttle.

A variable control edge or region is to be understood as a curve by which especially the free region, i.e. the corresponding section being passed by fluid, changes over its circumference, for example in steps and/or continuously. This occurs continually for a linear curve and step wise for an aperture.

The throttle, according to a particularly preferred embodiment, can be activated manually or by means of a drive. The drive can for example be an electric, hydraulic or pneumatic drive, where an angle positioning motor is particularly preferred. The drive can be directly connected to the throttle or also indirectly to the throttle via a transmission. The transmission can for example be a worm gear transmission, where the transmission according to a further preferred embodiment is adapted to the volume flow to be influenced, such that the movement in combination with the at least one throttle edge changes the flow cross section of the flow passage, so that a sufficiently high position accuracy is achieved. Since the change in flow cross section depends on the angular variation of the throttle and the configuration of the control edges, the opening and closing speed of the throttle can be set by a variable drive. For example, with a corresponding transmission ratio, the positioning accuracy of the flow cross section and therefore the flow at constant fluid pressure can be influenced.

According to a further particularly preferred embodiment, the throttle drive is arranged such that it can be at least partially pivoted away from the apparatus, in order to also allow a manual operation of the throttle.

The apparatus according to a further embodiment comprises at least one bypass actuating member, which can preferably be moved linearly in its main longitudinal direction and/or moved to rotate. For example, such a bypass actuating member can be configured in at least one region as a hollow cylinder, which is mounted to be slideable along the rotational axis and/or to rotate. According to a further particularly preferred embodiment, the rotary movement of the actuating member can be limited to certain positions, in particular to the positions resulting from the linear movement, so that for example a rotation of the actuating member is only possible in completely retracted or inserted position. It is also contemplated however that predetermined intermediate positions offer this possibility of rotational movement.

The bypass actuating member is located at least partially in the fluid flow passage and in a further particularly preferred embodiment itself forms a flow passage. This can occur, for example in that the actuating member is partially configured as a hollow shaft, in which the openings allow entry or exit of the fluid at predetermined positions.

In a further preferred embodiment, a plurality, in particular two or more apparatuses for determining a flow rate are arranged on at least one support, where the support is used to supply the apparatuses with the fluid via at least one corresponding connector.

According to a further particularly preferred embodiment, the apparatus comprises at least one microprocessor device, by means of which measurement parameters, for example the rotary speed of the rotary members, the fluid temperature, the fluid pressure, the fluid viscosity, the position of a throttle and/or the bypass actuating member, combinations thereof and the like can be detected or regulated or controlled and at least made available as a date signal.

Furthermore, the apparatus can also comprise a microprocessor device, which has at least one connector for output and/or input of at least one signal, where this can be both digital and analog signals. Such connectors can be in the form of electrical connectors, optical connectors or radio frequency connectors, where combinations and the like thereof can be employed for exchange of data signals. The present invention also incorporates for example the display of certain information directly on the device, for example the operational condition.

According to a further embodiment of the apparatus, at least one of the detected measurement parameters can be used to control or regulate the apparatus. In addition, additional microprocessor devices can be provided which allow the control, regulation or a manual operation of the apparatus. The invention also includes the use of a central microprocessor means of the apparatus, where measured values are detected and processed, such that for example the fluid flow rate can be controlled or regulated.

According to the present invention, the term "control" is to be understood as a process in the system, by which one or more parameters as input parameters influence other parameters as output parameters due to the particular characteristics of the system. Particular to system control is the open interaction path or a closed interaction path, by which the output parameters, influenced by the input parameters do not continually affect themselves and do not affect the same input parameters in return.

The term "regulation" according to the present invention is understood as a process, by which at least one parameter, which is to be regulated (regulation parameter) is continually detected and compared to another value, the command variable, and is then influenced so as to approach the command variable. Particular to system regulation is the closed interaction process, by which the regulation parameter continuously influences itself.

According to a further preferred embodiment, several microprocessor devices are provided, which for example by means of at least one overall control means, in particular a master controller, are controlled and/or regulated. For example, each apparatus for determining a flow rate has at least one associated control device. The control devices are connected with one another in a particularly preferred embodiment via a BUS system, TCP-IP, Peer-to-Peer, etc., where in a particularly preferred embodiment, the BUS system is configured as a ring BUS system.

Other combinations and methods for data communication are also contemplated according to the present invention, for example optical, electrical or radio transmission.

The object of the present invention is also achieved by the use of the above described apparatus, in which the flow rate for example for a oil lubrication system of a drive, a transmission or the like is determined.

In the following, the invention is described in conjunction with various embodiments, where these are given only as examples of the apparatus according to the present invention. The invention however encompasses modifications and other configurations which can be selected without limiting the scope of the invention. This relates particularly to the configuration of the throttle and its control edge or edges, the arrangement of the bypass and the form of the actuating member and the arrangement of the apparatus as a single unit or in an assembly.
- Fig. 1: shows a front side view of a first embodiment of the apparatus according to the invention for determining a flow rate.
- Fig. 2: shows a plan view of the apparatus of Fig. 1 without cover.
- Fig. 3: shows a cross section of the apparatus of claim 1 along the line A-A in Fig. 1.
- Figs. 4a to 4c: show different side views of the apparatus with different positions of the bypass actuating member.
- Fig. 5: shows a exploded representation of the apparatus of Fig. 1.
- Figs. 6a to 6d: show drawings of various embodiments of a throttle for the apparatus.
- Fig. 7: shows a schematic drawing of the arrangement of a plurality of apparatuses on a support unit with a control means.

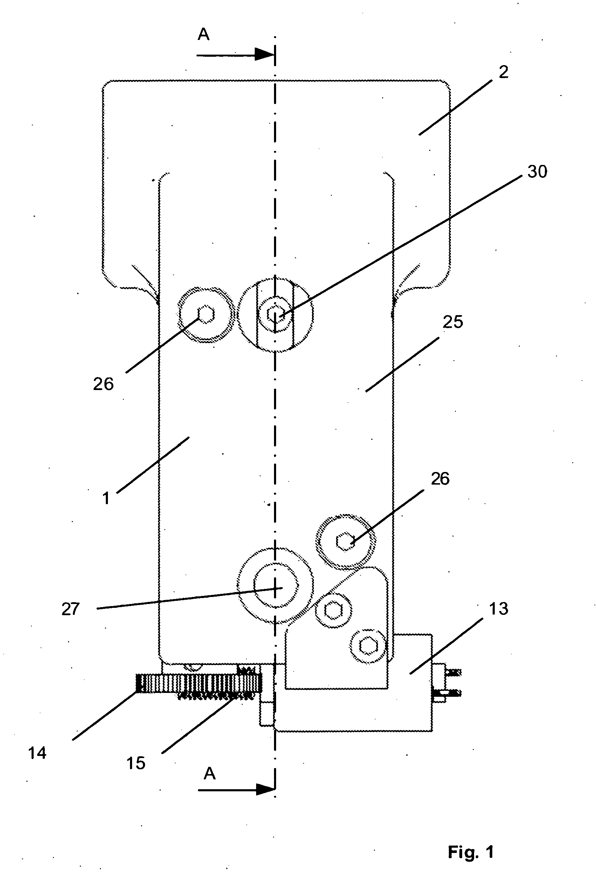

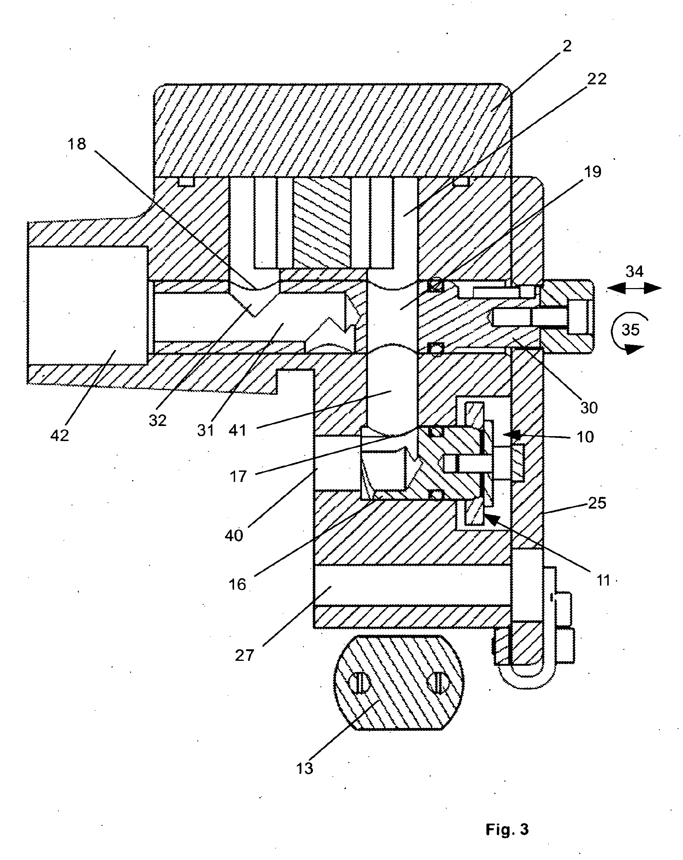

Figure 1 shows an embodiment of the apparatus according to the present invention from the front, where the basic housing 1, the drive 13 and the cover 2 are recognized. The housing 1 can for example be produced as an alu-fastmount standard housing, in which for example openings are provided for the fluid passage, the throttle 16, the bypass 30 and the like (see Fig. 3). Fig. 1 further shows the position of the bypass 30, which has a cover in the embodiment shown here. The drive 13 is arranged at the lower end of the housing, which cooperates via the worm gear 15 and the gear wheel 14 with the transmission of the throttle 10 (not shown). The front housing cover 25 is releasably connected to the housing by the two securement screws 26, where the housing 1 comprises an opening 27 which in particular serves for mounting the apparatus on a support.

The top 2 of the apparatus can be made of a synthetic material or polymer according to a preferred embodiment and is preferably a transparent polymer, for example acryl, polycarbonate or the like. According to a particularly preferred embodiment, the top is illuminated and shows the status of the apparatus through a corresponding signal color. In particular, the color code indicates a possible deviation of the fluid flow rate from a predetermined limit value. This can take place, for example in that the color green indicates a normal operation, the color yellow a value close to the limit and the color red indicates operation above or below the predetermined limit value. The color red can also indicate a functional defect of the apparatus.

The status of the apparatus is indicated by the color coding in a simple manner, so that when a plurality of such apparatuses are arranged in an assembly, the function of each individual apparatus is readily recognized by the user.

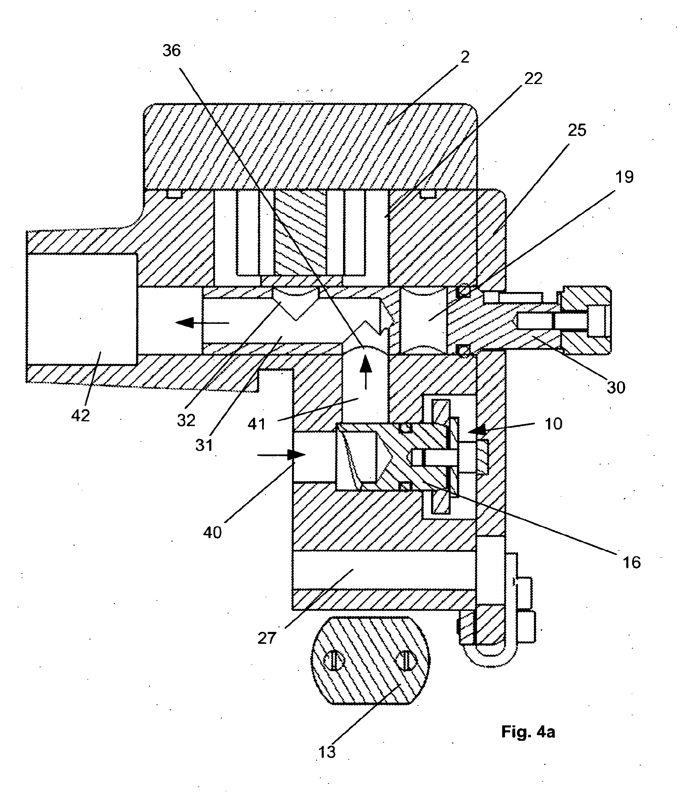

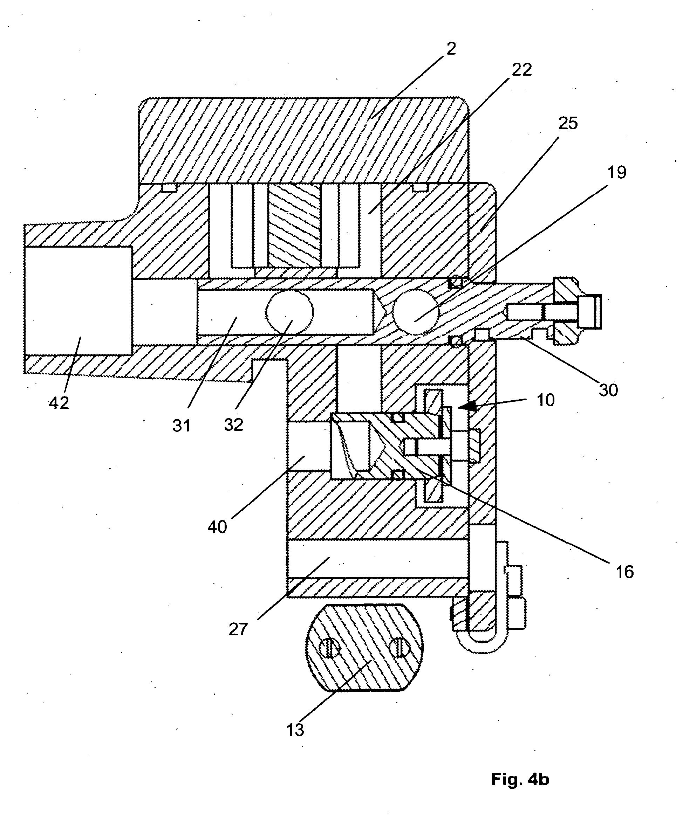

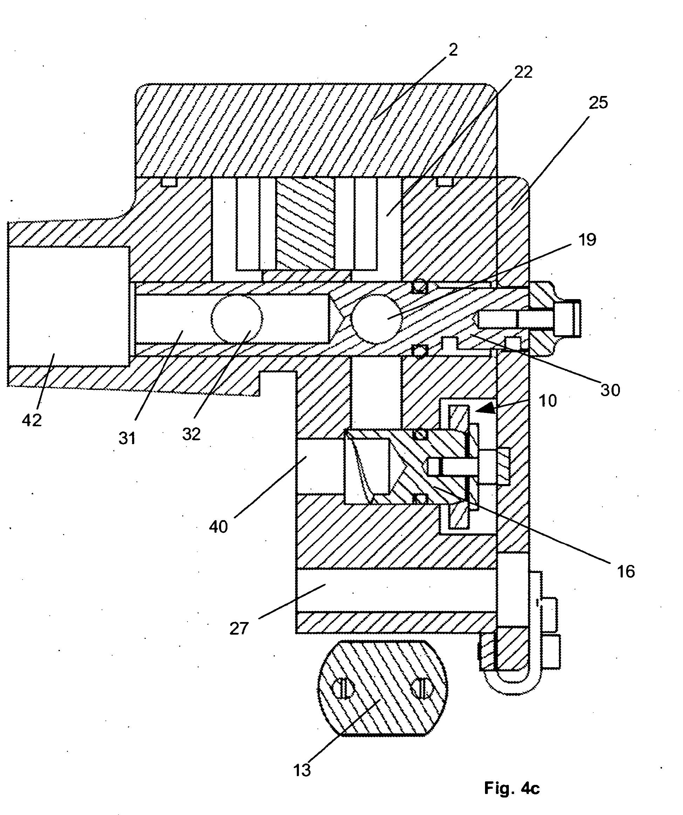

The apparatus according to Fig. 3 shows the pivot axis of the throttle 10, which carries a gear wheel 11. A worm drive 12 connects to this gear wheel, which in turn connects for rotation with the drive 13. The drive 13 itself comprises a drive shaft 15, which engages with the gear wheel 14 and the worm drive 12. With this drive, the throttle position can be changed, i.e. rotated. It becomes clear in view of Figs. 3 and 4 together, that an actuating member is moved about the axis of the throttle 10, which determines the flow cross section in this region through the interaction of the opening 17 and the flow passage 41.

According to the embodiment in Fig. 3, an actuating member for a throttle comprises a cylindrical hollow body, whose end wall toward the inlet opening 40 is partially configured with a spiral shape. According to this embodiment, the inclination of the wall is selected such that a curve-shaped variation of the flow cross section results, where other forms can also be selected, as described below.

The bypass 30 is also shown in Fig. 3, whose actuating member in longitudinal direction (arrow 34) is retracted and can be rotated (arrow 35) in the retracted position.

The hollow shaft 31 of the bypass is also seen in Fig. 3, which at its end is in fluid communication with the outlet 42. The by pass comprises a first bore 32 in the forward region, which in the shown form is also in fluid communication with a return flow from the measuring region 18. The bypass comprises a through opening 19 in a further region, which connects the flow passage 41 to the inlet of the measuring region 18.

In this condition, the fluid flows from the inlet 40 past the actuating member 16 of the throttle into the flow passage 41. From there it flows via the through opening 19 into the measurement chamber 22, passes the rotary members 23 and 24 to the outlet of the measuring region 18, then enters the hollow shaft 31 of the bypass 30 and leaves the apparatus via the outlet 42.

The bypass 30 with retracted actuating member 31 is also shown in Fig. 4a in a partial cross section. In this case, the actuating member 31 comprises an opening 36 which connects the flow passage 41 to the outlet 42 via the hollow shaft section when the actuating member is retracted. In this position of the bypass, the measurement chamber 22 is circumvented, so that the apparatus is operated without substantial interruption of the fluid flow and the flow rate can be set by the throttle. In this bypass position, a measurement of the flow rate does not take place. For this reason, repairs or modifications in the measuring region can be made in this operational condition. The measuring region can also be opened by removing the cover.

By rotating the bypass 30 or the actuating member 31, as shown in Fig. 4b, the flow passage is completely interrupted, so that the apparatus also has a total interruption function. According to this embodiment, the total interruption of the flow passage takes place in that the bypass actuating member is retracted and then pivoted by 90°. The present invention also contemplates modifications of the sequence of actuation.

Fig. 4c shows a further position of the bypass, in which the actuating member of the bypass in the non-retracted position has been pivoted, so that the flow paths in the apparatus are closed.

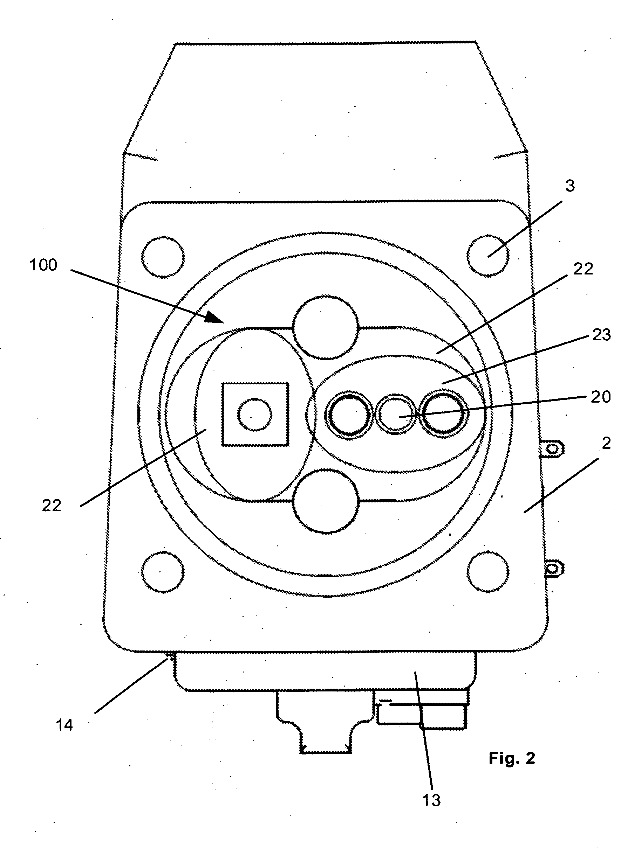

Fig. 2 is a top view of the measurement chamber 22 for the flow rate, where apart from the measurement chamber, the axes 20 and 21 are shown, upon which the rotary members for determining the flow rate are received. According to this embodiment, the rotary members are oval wheels 23, 24, whose rotation is detected by at least one corresponding sensor (not shown) and provided as a signal for determining the flow rate.

According to a further particularly preferred embodiment, a microprocessor device can be provided, which is preferably at least partially received in the cover 2 of the apparatus. The microprocessor collects the signals provided from a sensor and outputs at least one output signal, for example to a lighting unit of the apparatus. The control or regulation of the drive 13 and/or bypass 30 can also take place through a microprocessor device. The invention also contemplates that such a microprocessor device has further connectors for signal input and/or signal output, to be connected to further microprocessor devices. For example, the device or devices can be interconnected by means of a bus system to other devices or be controlled or regulated through a central microprocessor unit. The central microprocessor can for example be hand device, which establishes a data communication to one or multiple devices through wireless transmission, for example radio transmission or "Bluetooth". The central microprocessor can however also be a central control system, which controls and/or regulates a complete process as a process controller. It is also apparent that different systems can be combined with one another according to the present invention.

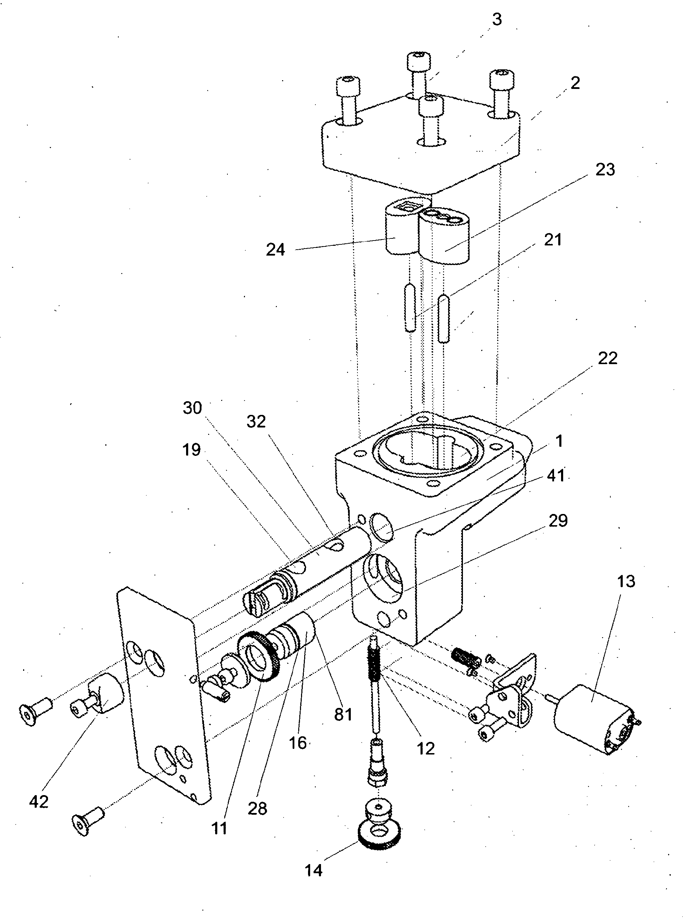

Fig. 5 shows an exploded view of the apparatus of Fig. 1, by which the position of the individual components within the housing are shown. The fluid inlet is on the backside of the housing 1 and joins into the throttle 10 or its actuating member 16 which is shown in Fig. 5 with the gear wheel 11 and the securement components. The gear wheel 11 is rotationally fixed to the actuating member 16 of the throttle 10 and is driven via the worm gear 12 connected to the gear wheel 14, whose worm drive is moved by the motor 13. Apart from the sloped front edge 81 of the actuating member, a sealing in shown, which prevents fluid loss in the opening 29 of the throttle and its components. The recess 41 is arranged above the throttle, in which the bypass actuating member 30 is received. It is configured as a hollow shaft in the forward region and comprises a through bore 19 and a bore opening 32. A cover 42 covers the bypass actuating member on the user side, by which the position of the bypass member as described above can be changed, for example manually.

A cover 2 is located at the head of the apparatus, which is fixed with four securement screws 3 to the housing 1. The cover 2 sealingly closes the measurement chamber 22, where preferably sealing rings are employed. The two oval wheels 23, 24 are arranged on the pivot axes 21 in the measurement chamber 22.

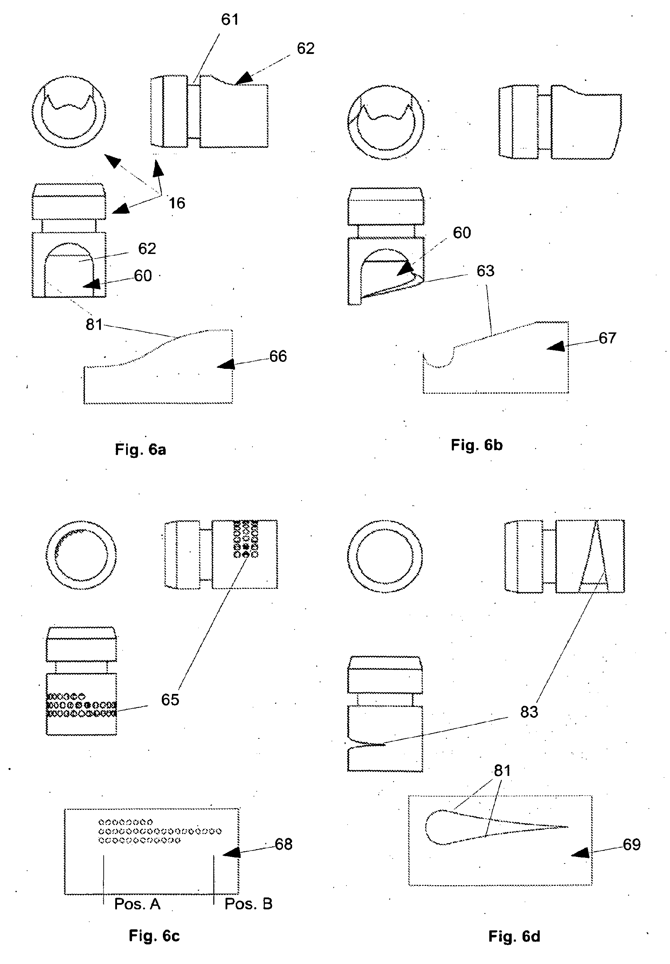

In Fig. 6a to 6c, various embodiments of the throttle actuating member are shown. In each case, the left top corner of the figure shows a front view, below this is a plan view and the right top of the figure shows a side view from the left. Furthermore, a schematic roll-out of the circumference of the throttle is shown for each embodiment.

The actuating member configured as a hollow cylinder shown in Fig. 6a comprises a gate-shaped cutout 60 on the forward top side, which together with the adjacent flow passage, in the mounted condition, determines the actual flow cross section. Preferably a sealing 28 is arranged in the peripheral groove 61, which avoids fluid loss from the apparatus. In the central region of the actuating member, a back wall 62 is provided, which defines the backside of the actuating member. The number 66 refers to the schematic roll-out projection, in particular with respect to the control edge region 81.

Fig. 6b shows a further embodiment for a actuating member of the throttle, by which the wall 63, apart from the opening 60, also changes in its periphery and thus forms the control edge 63. Viewing this wall as a roll-out projection, it becomes clear that this version represents a partially linear variation of the wall height. Thus, when rotating the actuating member in mounted condition, not only the opening 60 but also the varying wall 63 determines the flow cross section. This can also be taken from the illustration of the roll-out projection 67.

Fig. 6c shows a further embodiment with a plurality of openings 65 in the wall of the actuating member, whose position in the flow passage determine the free flow cross section. In particular, the openings can be selected to be in different rows and arrangements. As the roll-out 68 shows, the number of openings varies over the circumference so that for example the left side (position A) has three openings above one another and the right side (position B) has only one opening. This arrangement guarantees that a different number of openings form the effective flow cross section depending on the adjusted position of the throttle.

The control edge 83 of the actuating member in Fig. 6d has two sides, i.e. the opening tapers to a point and a different opening speed of the flow cross section results depending on the angle between the forward and rear edges. Thus, particularly small changes in the flow cross section can be achieved depending on the pivot angle. The free region of the circumference thus forms the free flow cross section by corresponding overlap with the flow passage.

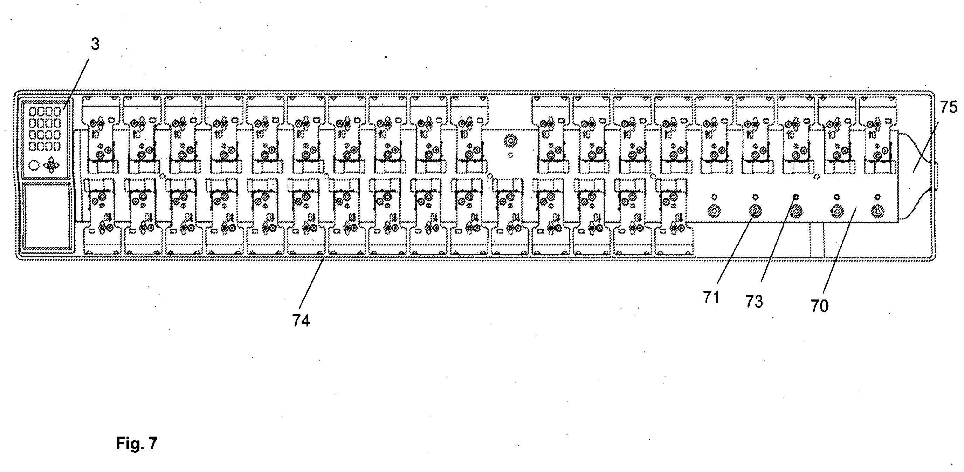

Fig. 7 shows an arrangement of a plurality of apparatuses 72 according to the invention on a support unit 70. The apparatuses are placed in fluid communication with a input 71 which establishes the fluid communication, for example with a releasable connector, between the supply line 75 integrated into the support unit and the inlet 40 of the apparatus. Furthermore, a securement pin 73 is provided which engages in a recess 27 of the apparatus. The support further comprises a central control panel 3 with which the individual apparatuses can be actuated. This takes place preferably via a data connection, for example a bus system which is installed between the central unit and the individual apparatuses.

## Claims

1. Apparatus for determining a flow rate comprising at least one flow passage (41) for a fluid, a measuring device (100) for measuring a flow rate and a throttle (10),
**characterized in that**
the apparatus includes at least one bypass (30) independent of the throttle (10) having at least one bypass actuating member comprising a cylindrical basic form that can move linearly in its main longitudinal direction and moved to rotate and wherein the bypass actuating member comprises a through opening (19) and a hollow shaft (31) with a first bore (32), and an opening (36),
when the bypass actuating member is in a first position the through opening (19) connects the flow passage (41) to an inlet of a measuring region of the measuring device (100) and to an outlet (42) of the apparatus and the first bore (32) is in fluid communication with an outlet of the measuring region (18), when the bypass actuating member is in a second position where the actuating member is retracted, the opening (36) of the actuating member connects the flow passage (41) to the outlet (42) of the apparatus via the hollow shaft (31)
circumventing the measuring region, and
when the bypass actuating member is in a third position where the actuating member is rotated the flow passage (41) is completely interrupted and does not connect to the outlet (42) of the apparatus,
and wherein the throttle (10) is arranged to be movable at least about a pivot axis, including a control edge region (63, 65, 81, 83) on its circumference, which determines the free flow cross section of the at least one flow passage (41) depending on its adjustment position with respect to the pivot axis.

2. Apparatus according to any one of the preceding claims, **characterized in that** the measuring device (100) for the flow rate comprises at least two rotatable rotary members (22, 23), which are arranged in the fluid flow passage and seal the flow passage such that fluid flow only takes place when the rotary members rotate.

3. Apparatus according to any one of the preceding claims, **characterized in that** the rotation of the rotary members (22, 23) is detected by at least one sensor.

4. Apparatus according to any one of the preceding claims, **characterized in that**
the rotary members (22, 23) are releasably connected to the measuring device (100), in particular on an axle mount in the measuring device.

5. Apparatus according to any one of the preceding claims, **characterized in that**
the throttle (10) has a substantially rotationally symmetric basic form in an axial extension direction, wherein the schematic roll-out (66, 67, 68, 69) of the circumference of the throttle follows a functional curve in at least one control edge region (63, 65, 81, 83), which is selected from the group of functions including linear, quadratic, logarithmic, polynomial or higher functions and in particular also step functions, combinations thereof and the like.

6. Apparatus according to any one of the preceding claims, **characterized in that**
the throttle (10) is moved by means of at least one drive device (13), which is selected from a group of drives including electric, hydraulic and pneumatic drives, manual drives, in particular also motors, for example angle adjustment motors.

7. Apparatus according to any one of the preceding claims, **characterized in that**
the drive of the throttle (10) takes place via a transmission (14, 12, 11), in particular the worm gear transmission.

8. Apparatus according to any one of the preceding claims, **characterized in that**
the throttle (10) is at least partially a hollow cylinder with the drive (13) arranged at its one end region, wherein its other end region together with at least one opening of the flow path (41) determines the free flow cross section.

9. Apparatus according to any one of the preceding claims, **characterized in that**
the bypass actuating member (30) comprises a substantially rotationally symmetric basic form, for example a cylindrical basic form, and comprises at least two flow through openings (32, 36, 19).

10. Apparatus according to any one of the preceding claims, **characterized in that**
the bypass actuating member (30) is arranged in respect of its extension direction to be linearly movable (34) and/or rotatable (35).

11. Apparatus according to any one of the preceding claims, **characterized in that**
the bypass actuating member (30) is located at least partially in the fluid flow passage.

12. Apparatus according to any one of the preceding claims, **characterized in that**
at least the measuring device (100), the throttle (10), the bypass actuating member (30) and the at least one flow passage (41) are integrated into one unit.

13. Apparatus according to any one of the preceding claims, **characterized in that**
the apparatus comprises at least one microprocessor device for detecting at least one parameter, for example the rotation of the rotary members (22, 23), the temperature, pressure, the viscosity, the position for example of the throttle (10) and/or the bypass actuating member (30), combinations thereof and the like.

14. Apparatus according to any one of the preceding claims, **characterized in that**
the apparatus is arranged on at least one support, wherein said support (70) provides at least one fluid supply (75) and is at least in fluid communication with the apparatus.

15. Apparatus according to claim 13, **characterized in that**
the microprocessor device comprises at least one connector for output and input of at least one electronic signal and in particular comprises at least one connector selected from the group of electronic connectors including electric lines, radio signals, optical lines, combinations thereof and the like.

16. Apparatus according to claim 13 and/ or claim 15, **characterized in that**
the apparatus comprises a central microprocessor is provided, with which at least the signals of the at least one apparatus for determining a flow rate is detected, processed and the apparatus is at least controlled, preferably regulated.

17. Apparatus according to any one of the preceding claims, **characterized in that**
the apparatus is connected to at least one microprocessor device through a bus system, Peer-to-Peer, TCP-IP, combinations thereof and the like.

18. Use of an apparatus for determining a flow rate according to any one of the previous claims for regulating and controlling an oil lubrication system, for example a drive, a transmission or the like.

## Patentansprüche

1. Vorrichtung zur Bestimmung eines Volumenstroms mit wenigstens einem Strömungspfad (41) für ein Fluid, einer veränderbaren Messeinrichtung (100) und einer Drossel (10),
**dadurch gekennzeichnet, dass**
die Vorrichtung wenigstens einen von der Drossel (10) unabhängigen Bypass (30) mit wenigstens einem Bypassstellglled mit einer zylindrische Grundform, das In Bezug aufseine Haupterstreckungsrichtung linearbeweglich (34) und drehbeweglich angeordnet ist, aufweist,
und wobei das Bypassstellglied eine Durchströmungsöffnung (19) und eine hohle Achse (31) mit einer ersten Bohrung (32) und einer Öffnung (36) aufweist,
wenn das Bypassstellglied in einer ersten Position ist, die Durchströmungsöffnung (19) den Strömungspfad (41) mit einer Zuführung eines Messberelchs der Messeinrichtung (100) und mit einem Auslass (42) der Vorrichtung verbindet und die erste Bohrung (32) flüssigkeitsleitend verbunden Ist mit einem Auslass des Messbereichs (18),
wenn das Bypassstellglied in einer zweiten Position Ist, wobei das Stellglied zurückgezogen ist, die Öffnung (36) des Stellglieds den Strömungspfad (41) mit dem Auslass (42) der Vorrichtung über die hohle Achse (31) verbindet und dabei den Messbereich umgeht, und
wenn das Bypassstellglied in einer dritten Position ist, wobei das Stellglied gedreht ist, der Strömungspfad (41) vollständig unterbrochen Ist und nicht mit dem Auslass (42) der Vorrichtung verbunden Ist,
und wobei die wenigstens um eine Drehachse beweglich angeordnete Drossel (10) am Umfang einen Steuerkantenbereich (63,65, 81, 63) aufweist, welcher In Abhängigkeit der Stellposition zu wenigstens einem Strömungspfad (41) in der Vorrichtung den freien Strömungsquerschnitt bestimmt.

2. Vorrichtung gemäß einem der vorstehenden Ansprüche, **dadurch gekennzeichnet, dass**
die Messeinrichtung (100) für den Volumenstrom wenigstens zwei drehbewegliche Rotationskörper (22, 23) aufweist, welche in dem Strömungspfad des Fluid angeordnet sind und den Strömungspfad derart abdichten, dass ein Volumenstrom nur bei Drehung der Rotationskörper stattfindet.

3. Vorrichtung gemäß einem der vorstehenden Ansprüche, **dadurch gekennzeichnet, dass**
die Drehung der Rotationskörper (22, 23) mittels wenigstens eines Sensors erfasst wird.

4. Vorrichtung gemäß einem der vorstehenden Ansprüche, **dadurch gekennzeichnet, dass**
die Rotationskörper (22, 23) mit der Messeinrichtung (100), insbesondere einer Achsaufnahme in der Messeinrichtung, lösbar verbunden sind.

5. Vorrichtung gemäß einem der vorstehenden Ansprüche, **dadurch gekennzeichnet, dass**
die Drossel (10) eine Im wesentlichen rotationssymmetrische Grundform in einer axialen Erstreckungsrichtung aufweist, wobei die schematische Abwicklung (66, 67, 68, 69) des Umfangs der Drossel wenigstens in einen Steuerkantenbereich (63, 65, 81, 83) mit einem funktionellen Verlauf aufweist, der aus einer Gruppe von Funktionen ausgewählt wird, welche lineare, quadratische, logarithmische, polynome oder höhere Funktionen und insbesondere auch Sprungfunktionen, Kombinationen hiervon und dergleichen aufweisen.

6. Vorrichtung gemäß einem der vorstehenden Ansprüche, **dadurch gekennzeichnet, dass**
die Drossel (10) mittels wenigstens einer Antriebseinrichtung (13) bewegt wird, welche aus einer Gruppe von Antrieben ausgewählt wird, welche elektrische, hydraulische und pneumatische Antriebe, manuelle Antriebe, insbesondere auch Motoren, wie beispielsweise Winkelmotoren, aufweist.

7. Vorrichtung gemäß einem der vorstehenden Ansprüche, **dadurch gekennzeichnet, dass**
der Antrieb der Drossel (10) über ein Getriebe (14,12,11), insbesondere ein Schneckengetriebe, erfolgt.

8. Vorrichtung gemäß einem der vorstehenden Ansprüche, **dadurch gekennzeichnet, dass**
die Drossel (10) wenigstens abschnittsweise ein Hohlzylinder ist, an dessen einem Endbereich der Antrieb (13) angeordnet ist und dessen anderer Endbereich zusammen mit wenigstens einer Öffnung des Strömungspfades (41) des Fluids den freien Strömungsquerschnitt bestimmt.

9. Vorrichtung gemäß einem der vorstehenden Ansprüche, **dadurch gekennzeichnet, dass**
das Bypassstellglied (30) eine im Wesentlichen rotationssymmetrische Grundform, wie beispielsweise eine zylindrische Grundform, und wenigstens zwei Durchströmungsöffnungen (32, 36, 19) aufweist.

10. Vorrichtung gemäß einem der vorstehenden Ansprüche, **dadurch gekennzeichnet, dass**
das Bypassstellglied (30) In Bezug auf seine Haupterstreckungsrichtung linearbeweglich (34) und/oder drehbeweglich (35) angeordnet ist.

11. Vorrichtung gemäß einem der vorstehenden Ansprüche, **dadurch gekennzeichnet, dass**
das Bypassstellglied (30) wenigstens abschnittsweise in dem Strömungspfad (31) angeordnet ist.

12. Vorrichtung gemäß einem der vorstehenden Ansprüche, **dadurch gekennzeichnet, dass**
wenigstens die Messeinrichtung (100), die Drossel (10), das Bypassstellglied (30) und der wenigstens eine Strömungspfad (41) in einer Baueinheit zusammengefasst sind.

13. Vorrichtung gemäß einem der vorstehenden Ansprüche, **dadurch gekennzeichnet, dass**
die Vorrichtung wenigstens eine Mikroprozessoreinrichtungzur Erfassung wenigstens einer Messgröße, wie beispielsweise der Drehung der Rotationskörper (22,23), der Temperatur, des Drucks, der Viskosität, der Stellposition beispielsweise der Drossel (10) und/oder des Bypassstellglieds (30), Kombinationen hieraus und dergleichen, aufweist.

14. Vorrichtung gemäß einem der vorstehenden Ansprüche, **dadurch gekennzeichnet, dass**
wenigstens eine der Vorrichtungen auf wenigstens einem Träger angeordnet ist, wobei dieser Träger (70) wenigstens die Zuführung (75) des Fluids bereitstellt und mit der Vorrichtung wenigstens flüssigkeitsleitend verbunden ist.

15. Vorrichtung gemäß Anspruch 13, **dadurch gekennzeichnet, dass**
die Mikroprozessoreinrichtung wenigstens einen Anschluss zur Ausgabe und Eingabe wenigstens eines elektronischen Signals aufweist und insbesondere wenigstens einen Anschluss aus einer Gruppe von elektronischen Anschlussverbindungen aufweist, welcher aus elektrischen Leitungen, Funksignalen, optischen Leitungen, Kombinationen hieraus und dergleichen ausgewählt wird.

16. Vorrichtung gemäß Anspruch 13 und/oder Anspruch 15, **dadurch gekennzeichnet, dass**
die Vorrichtung mit einem zentralen Mikroprozessor vorgesehen Ist, mit welcher wenigstens die Signale der wenigstens einen Vorrichtung zum Bestimmen eines Volumenstroms erfasst, ausgewertet und die Vorrichtung wenigstens gesteuert, vorzugsweise geregelt, wird.

17. Vorrichtung gemäß einem der vorstehenden Ansprüche, **dadurch gekennzeichnet, dass**
die Vorrichtung mit wenigstens einer Mikroprozessoreinrichtung über ein Bus-System, Peer-to-Peer, TCP-IP, Kombinationen hieraus und dergleichen verbunden Ist.

18. Verwendung einer Vorrichtung zur Bestimmung eines Volumenstroms gemäß einem der vorstehenden Ansprüche für die Regelung oder Steuerung einer Ölschmlerung für beispielsweise einen Antrieb, ein Getriebe oder dergleichen.

## Revendications

1. Appareil destiné à la détermination d'un débit comprenant au moins un passage d'écoulement (41) destiné à un fluide, un dispositif de mesure (100) destiné à la mesure d'un débit et un étrangleur (10),
**caractérisé en ce que**
l'appareil comporte au moins une dérivation (30) indépendante de l'étrangleur (10) possédant au moins un élément de commande de dérivation comprenant une forme de base cylindrique qui peut se déplacer linéairement dans sa direction longitudinale principale et déplacé pour faire rotation, et dans lequel l'élément de commande de dérivation comprend un orifice de passage (19) et un arbre creux (31) avec un premier perçage (32) et un orifice (36), lorsque l'élément de commande de dérivation est dans une première position, l'orifice de passage (19) relie le passage d'écoulement (41) à une entrée d'une région de mesure du dispositif de mesure (100) et à une sortie (42) de l'appareil et le premier perçage (32) est en communication fluide avec une sortie de la région de mesure (18), lorsque l'élément de commande de dérivation est dans une seconde position où l'élément de commande est rétracté, l'orifice (36) relatif à l'élément de commande relie le passage d'écoulement (41) à la sortie (42) de l'appareil via l'arbre creux (31) délimitant la région de mesure, et
lorsque l'élément de commande de dérivation est dans une troisième position où l'élément de commande fait rotation, le passage d'écoulement (41) est complètement interrompu et ne se connecte pas à la sortie (42) de l'appareil,
dans lequel l'étrangleur (10) est disposé afin d'être mobile au moins autour d'un axe de pivot, comprenant une région en bordure de commande (63, 65, 81, 83) sur sa circonférence, qui détermine la section transversale d'écoulement libre d'au moins un le passage d'écoulement (41) en fonction de sa position d'ajustement par rapport à l'axe de pivot.

2. Appareil selon une quelconque des revendications précédentes, **caractérisé en ce que**
le dispositif de mesure (100) destiné au débit comprend au moins deux éléments circulaires rotatifs (22, 23) qui sont disposés dans le passage d'écoulement de fluide et colmatent le passage d'écoulement de sorte que l'écoulement de fluide a uniquement lieu lorsque les éléments circulaires font rotation.

3. Appareil selon une quelconque des revendications précédentes, **caractérisé en ce que** la rotation des éléments circulaires (22, 23) est détectée par au moins un capteur.

4. Appareil selon une quelconque des revendications précédentes, **caractérisé en ce que**
les éléments circulaires (22, 23) sont connectés de manière amovible au dispositif de mesure (100), en particulier sur un support d'essieu dans le dispositif de mesure.

5. Appareil selon une quelconque des revendications précédentes, **caractérisé en ce que**
l'étrangleur (10) possède une forme de base symétrique principalement rotative dans une direction d'extension axiale, dans lequel le transfert schématique (66, 67, 68, 69) de la circonférence de l'étrangleur suit une courbe fonctionnelle dans au moins une région en bordure de commande (63, 65, 81, 83) qui est sélectionnée à partir du groupe de fonctions comportant des fonctions linéaires, quadratiques, logarithmiques, polynomiales ou supérieures et en particulier également des fonctions de progression, des combinaisons de celles-ci, et similaires.

6. Appareil selon une quelconque des revendications précédentes, **caractérisé en ce que**
l'étrangleur (10) est déplacé au moyen d'au moins un dispositif de mécanisme (13), qui est sélectionné à partir d'un groupe de mécanismes comportant des commandes électriques, hydrauliques et pneumatiques, des commandes manuelles, en particulier également des moteurs, par exemple des moteurs d'ajustement d'angle.

7. Appareil selon une quelconque des revendications précédentes, **caractérisé en ce que**
le mécanisme de l'étrangleur (10) est réalisé via une transmission (14, 12, 11), en particulier la transmission par engrenage à vis sans fin.

8. Appareil selon une quelconque des revendications précédentes, **caractérisé en ce que**
l'étrangleur (10) est au moins partiellement un vérin creux avec le mécanisme (13) disposé sur l'une de ses régions d'extrémité, dans lequel son autre région d'extrémité détermine la section transversale d'écoulement libre ensemble avec au moins un orifice du passage d'écoulement (41).

9. Appareil selon une quelconque des revendications précédentes, **caractérisé en ce que**
l'élément de commande de dérivation (30) comporte une forme de base symétrique principalement rotative, par exemple une forme de base cylindrique, et comprend au moins deux orifices de passage d'écoulement (32, 36, 19).

10. Appareil selon une quelconque des revendications précédentes, **caractérisé en ce que**
l'élément de commande de dérivation (30) est disposé par rapport à sa direction d'extension afin d'être mobile (34) et/ou rotatif (35) linéairement.

11. Appareil selon une quelconque des revendications précédentes, **caractérisé en ce que**
l'élément de commande de dérivation (30) est situé au moins partiellement dans le passage d'écoulement de fluide.

12. Appareil selon une quelconque des revendications précédentes, **caractérisé en ce que**
au moins le dispositif de mesure (100), l'étrangleur (10), l'élément de commande de dérivation (30) et au moins le passage d'écoulement (41) unique sont intégrés dans une seule unité.

13. Appareil selon une quelconque des revendications précédentes, **caractérisé en ce que**
l'appareil comporte au moins un dispositif à microprocesseur destiné à détecter au moins un paramètre, par exemple la rotation des éléments circulaires (22, 23), la température, la pression, la viscosité, la position par exemple de l'étrangleur (10) et/ou de l'élément de commande de dérivation (30), des combinaisons de ceux-ci et similaires.

14. Appareil selon une quelconque des revendications précédentes, **caractérisé en ce que**
l'appareil est disposé sur au moins un support, dans lequel ledit support (70) présente au moins une alimentation en fluide (75) et est au moins en communication fluide avec l'appareil.

15. Appareil selon la revendication 13, **caractérisé en ce que**
le dispositif à microprocesseur comporte au moins un connecteur destiné à l'entrée et à la sortie d'au moins un signal électrique et comporte en particulier au moins un connecteur sélectionné à partir du groupe des connecteurs électriques comprenant des câbles électriques, des signaux radio, des câbles de fibre optique, des combinaisons de ceux-ci et similaires.

16. Appareil selon la revendication 13 et/ou la revendication 15, **caractérisé en ce que**
l'appareil comporte un microprocesseur central, avec lequel au moins les signaux d'au moins l'appareil unique destinés à la détermination d'un débit sont détectés, traités et **en ce que** l'appareil est au moins commandé, de préférence régulé.

17. Appareil selon une quelconque des revendications précédentes, **caractérisé en ce que**
l'appareil est connecté à au moins un dispositif à microprocesseur par un système de bus, pair à pair, TCP-IP, des combinaisons de ceux-ci et similaires.

18. Utilisation d'un appareil destiné à la détermination d'un débit selon une quelconque des revendications précédentes en vue de la régulation et de la commande d'un système de lubrification d'huile, par exemple un mécanisme, une transmission ou similaires.
